Europäisches Patentamt

European Patent Office

Office européen des brevets

(19)

(11) Veröffentlichungsnummer: **0 049 367**
**B1**

(12) # EUROPÄISCHE PATENTSCHRIFT

(45) Veröffentlichungstag der Patentschrift:
02.01.85

(21) Anmeldenummer: 81106895.6

(22) Anmeldetag: 03.09.81

(51) Int. Cl.³: **A 01 N 55/04**, A 01 N 55/02,
C 08 K 5/00 // C08K3/10,
C08K3/16, C08K3/30, C08K5/57,
C08K5/59

(54) Biocide Wirkstoffkombination und ihre Verwendung in Formmassen aus Kunststoff.

(30) Priorität: 01.10.80 DE 3037022

(43) Veröffentlichungstag der Anmeldung:
14.04.82 Patentblatt 82/15

(45) Bekanntmachung des Hinweises auf die Patenterteilung:
02.01.85 Patentblatt 85/1

(84) Benannte Vertragsstaaten:
AT BE CH DE FR GB IT LI LU NL SE

(56) Entgegenhaltungen:
DE - A - 2 013 792
GB - A - 1 169 288
US - A - 3 214 281
US - A - 3 288 674
US - A - 3 801 534

A.K. SAWYER: "Organotin compounds", Band 3, 1972,
Seiten 933-940, Marcel Dekker, Inc. New York, U.S.A.
K. THINIUS: "Stabilisierung und Alterung von
Plastwerkstoffen" Band 1, 1969, Seiten 157-159
Akademie-Verlag Berlin, DE

(73) Patentinhaber: **DYNAMIT NOBEL
AKTIENGESELLSCHAFT, Postfach 1209,
D-5210 Troisdorf, Bez. Köln (DE)**

(72) Erfinder: **Spielau, Paul, Dr., Van-Gogh-Platz 10,
D-5210 Troisdorf-Eschmar (DE)**
Erfinder: **Vohwinkel, Horst, Cranachstrasse 4,
D-5210 Troisdorf-Eschmar (DE)**
Erfinder: **Pütz, Peter, Agnesstrasse 1, D-5205 St.
Augustin 3/Menden (DE)**

EP 0 049 367 B1

**Beschreibung**

Die Erfindung betrifft eine biocide Wirkstoffkombination auf Basis von 10,10'-Oxybisphenoxyarsin sowie die Verwendung dieser Wirkstoffkombination in Formmassen aus Kunststoffen.

Als biocide Wirkstoffe werden solche Stoffe verstanden, deren Eigenschaft darin besteht, die Stabilität eines Kunststoffmaterials gegen biologischen Angriff zu gewährleisten. Der biologische Angriff kann auf unterschiedliche Art erfolgen, z. B. durch Algen, Pilze, Bakterien, Seewasserschädlinge, niedere Tiere etc.

Die an biocide Wirkstoffe zu stellenden Anforderungen lassen sich folgendermaßen umreißen:

— breites Spektrum antimikrobieller Aktivität,
— Wirksamkeit in niedriger Konzentration,
— kein negativer Einfluß auf das zu schützende Material (keine Verfärbung, Verschlechterung der Wärmestabilität oder der Lichtstabilität usw.),
— Verträglichkeit mit Weichmachern und anderen Zusätzen (Stabilisatoren, Gleitmitteln, Antioxidantien usw.),
— keine negativen Nebeneigenschaften (Korrosivität, Hautreizung, Geruch des Fertigprodukts),
— thermische Beständigkeit und geringe Flüchtigkeit bei Verarbeitungsbedingungen,
— Lagerstabilität,
— einfach zu applizieren,
— Dauerhaftigkeit in der Anwendung,
— geringe Warmblüter-Toxizität.

Diese Anforderungen werden im allgemeinen gut erfüllt durch Arsenverbindungen, besonders solcher auf Basis organischer Arsinderivate. Bevorzugt sind Phenoxiarsinverbindungen, besonders 10,10'-Oxybisphenoxyarsin oder ggf. die in der DE-PS 1 694 894 genannten Phenoxiarsinderivate, die ein breites Spektrum starker antimikrobieller Wirksamkeit mit geringer Warmblüter-Toxizität verbindet. Es hat sich jedoch herausgestellt, daß mit Arsenverbindungen ausgerüstete Kunststoffolien und Formkörper beim praktischen Gebrauch in Gegenwart von Wasser nach einiger Zeit ihre biocide Wirksamkeit verlieren und erneut dem biologischen Angriff z. B. durch Bewuchs unterliegen.

Daraufhin angestellte Versuche einer Lagerung von mit Arsenverbindungen ausgerüsteter Kunststoffolie in fließendem Wasser haben ergeben, daß bereits nach 8 bis 10 Wochen bei 20° C (Testbedingungen) etwa die Hälfte des Arsengehalts aus den Kunststoff-Folien verloren gegangen war. Demgemäß findet trotz der ausgeprägten Schwerlöslichkeit der verwendeten Arsenverbindungen in Wasser eine durch Messung des Arsengehalts nachweisbare Eluierung der Arsenverbindungen statt; die bei Temperaturerhöhung noch verstärkt wird (siehe Vergleichsbeispiele).

Es bestand demgemäß die Aufgabe, die langfristige biocide Ausrüstung von Kunststoffen sicherzustellen und die Eluierung des biociden Wirkstoffes zu verhindern und dabei nach Möglichkeit die als hochwirksam und für Warmblüter wenig toxischen Arsenverbindungen auf Basis von Phenoxiarsin Verbindungen beizubehalten.

Es war zwar bekannt, 10,10'-Oxybisphenoxyarsin bzw. andere Phenoxiarsine als biocid wirksame Stoffe zu verwenden und auch Zinnverbindungen aufgrund ebenfalls bekannter biocider Wirksamkeit gemeinsam mit Phenoxiarsinen oder anstelle von Phenoxiarsinen nach der deutschen Offenlegungsschrift 2 013 792 und dem US-Patent 3 214 281 Kunststoffen zuzusetzen. Hierbei werden die Zinnverbindungen wegen der biociden Wirksamkeit benutzt, jedoch gibt es keinen Hinweis, daß die vorliegende Aufgabe der Verhinderung der Eluierung von Phenoxiarsinverbindungen gestellt oder gelöst wurde.

Gegenstand der Erfindung sind Formmassen zur Herstellung von Formkörpern aus Kunststoff, bzw. ein Verfahren zur Herstellung einer Kunststoff-Formmasse, insbesondere auf Basis Weich-PVC und/oder Verfahren zur Herstellung einer Kunststoff-Formmasse, insbesondere auf Basis Weich-PVC und/oder Ethylen/Vinylacetat-Co- bzw. Pfropfpolymerisaten oder gegebenenfalls Polyethylen, dadurch gekennzeichnet, daß der Kunststoff und gegebenenfalls Stabilisatoren für die Licht-, Wetter- und Wärmebeständigkeit und gegebenenfalls übliche Zusätze wie beispielsweise Farbmittel, Füllstoffe, Gleitmittel sowie 10,10'-Oxybisphenoxyarsin als biociden Wirkstoff und als die Eluierung der Arsenverbindung aus Kunststoff verhinderndes Mittel eine Organo-Zinnverbindung oder eines Zinn-II-Salzes, in Mengen von 0,1 bis 5,0 Gew.-Teile berechnetes Zinn einer Zinnverbindung je Gew.-Teil der Phenoxyarsin-Verbindung vermischt und formgebend verarbeitet werden.

Die Zinnverbindungen der Wirkstoffkombination erfüllen überraschend die gestellte Aufgabe und verhindern die Eluierung der Arsenverbindungen durch Wasser aus Kunststoffen. Im Testversuch mit fließendem Wasser sinkt der Arsengehalt von Folien und Formkörpern aus Kunststoffen bei Anwesenheit der Zinnverbindungen in einer Zeit bis 8 Wochen nur geringfügig und nimmt danach auch nach so langen Zeiten wie einem halben und einem Jahr nur sehr geringfügig weiter ab.

Die Zinnverbindungen haben also in der Wirkstoffkombination die spezifische Wirkung, die Eluierbarkeit der Arsenverbindungen zu verhindern und damit die durch die Ausrüstung des Kunststoffes mit einer Arsenverbindung erzielte biocide Wirkung auf lange Zeit zu erhalten.

Die Menge der Zinnverbindungen ist daher der Menge der Arsenverbindung anzupassen, so daß eine Menge von 0,1 bis 5 Gew.-Teilen, vorzugsweise zwischen 0,3 und 3 Gew.-Teilen berechnetes Sn aus der jeweiligen Zinnverbindung je Gewichtsteil der Arsenverbindung in der Wirkstoffkombination wie auch in den damit hergestellten Kunststoff-Formmassen und Formkörpern enthalten ist.

Nun sind eine Anzahl von Zinnverbindungen als Zusatz zu Kunststoffen und Anstrichmitteln durchaus gebräuchlich, in denen diese als Stabilisatoren gegen Lichteinwirkung und Wärmeeinwirkung auf die Kunststoffe benutzt werden. Eine biocide Wirkung einer Reihe von Zinnverbindungen, insbesondere von Triorganozinnverbindungen, zur Bekämpfung von Bewuchs auf Kunststoffen ist ebenfalls bekannt.

Bei den Sn-Verbindungen gemäß vorliegender Erfindung ist jedoch die biocide Wirksamkeit der verwendeten Sn-Verbindungen keine Voraussetzung, vorteilhaft können sogar Sn-Verbindungen, die biocid unwirksam sind oder als untoxisch im Sinne des Lebensmittelgesetzes einzustufen sind, eingesetzt werden.

Insbesondere konnte aus dem bisherigen Gebrauch von Zinnverbindungen als Zusatzstoff in Kunststoffen nicht auf die spezifische Wirksamkeit der Zinnverbindungen zur Verhinderung der Eluierbarkeit von bewuchshemmenden Arsenverbindungen aus Kunststoffen gemäß der Erfindung geschlossen werden.

Als Zinnverbindungen gemäß der Erfindung kommen Organozinnverbindungen und Zinn-II-salze in Frage.

Als Organozinnverbindungen kommen solche mit an das Zinn gebundenen Resten R und X in Frage, in denen die Reste R Alkylreste von 1 bis 10 Kohlenstoffatomen oder Arylreste, beispielsweise den Phenylrest und X Halogene, Schwefel, Sauerstoff, Alkoxidgruppen, Reste von Carbonsäuren oder Carbonsäureestern sowie Thiocarbonsäuren oder deren Estern bedeuten.

Die Organozinnverbindungen mit den Resten R und X können ein oder mehrere bis zu etwa sechs Zinnatome je Molekül enthalten, wobei gewöhnlich in Triorgano-, Diorgano- oder Monoorganozinnverbindungen unterschieden wird je nach der Anzahl der Organogruppen, d. h. der Alkyl- bzw. Arylgruppen, die an jedes Zinnatom gebunden sind. Hierbei können Zinnverbindungen des Typus $R_3SnX$, $R_2SnX_2$ und $RSnX_3$ ein Zinnatom im Molekül und einwertige Reste R und X enthalten. Zinnverbindungen vom Typus $R_2SnX$ enthalten einen zweiwertigen Rest X, beispielsweise eine Mercaptocarbonsäure und ein Zinnatom je Molekül, während solche vom Typus $(R_3Sn)_2X$, beispielsweise die bis-(Trialkylzinn)-oxide und -sulfate, einen zweiwertigen Rest X zwischen zwei Zinnatomen besitzen. Ringförmige Strukturen besitzen beispielsweise Dialkylzinnsulfide der Formel $(Alk_2Sn—S—)_3$ mit zwei je Zinnatom gebundenen Alkylresten, wobei drei jeweils über zweiwertige Sulfidreste X verbundene Zinnatome mit den Sulfidresten einen Sechsring bilden und die Monoalkylthiostannonsäuren der Formel $Alk_4Sn_4S_6$, in denen ein Alkylrest an jedes Zinnatom gebunden ist, das über je 3 zweiwertige Sulfidreste X an drei weitere Zinnatome in Art einer Adamantanstruktur gebunden ist.

Gemeinsam ist den Organozinnverbindungen also vierwertiges Zinn, wobei im Falle von Zinnverbindungen mit einem Zinnatom je Molekül die Zahl der stets einwertigen Organoreste R und der einwertigen Reste X sich zu vier ergänzen oder ein zweiwertiger Rest X und Organoreste zum Zinnatom vier Bindungen besitzen, und im Falle zweiwertiger Reste X als Brücke zwischen zwei Zinnatomen ebenfalls vier Bindungen von jedem Zinnatom eines Ringsystems ausgehen. Alle Organozinnverbindungen, gleichgültig ob ein oder mehr Zinnatome je Molekül enthaltend, besitzen demnach mindestens einen Organorest und mindestens einen ein- oder zweiwertigen Rest X je Zinnatom.

In zahlreichen Di- und Monoorganozinnverbindungen mit zweiwertigen Resten X, besonders denen der unten näher beschriebenen Dicarbonsäuren und Mercaptocarbonsäuren stehen Stoffe mit einem Zinnatom je Molekül und daran gebundenen zweiwertigem Rest X mit Ringverbindungen aus mehreren Zinnatomen im Gleichgewicht, in denen zweiwertige Reste X Brücken zwischen jeweils zwei Zinnatomen bilden.

In Trialkylzinnverbindungen vom Typus $R_3SnX$ und $(R_3Sn)_2X$ sind bevorzugte Alkylreste die Propyl- und Butylreste, ferner sind Methylreste und der substituierte Alkylrest $Alk—O—CO—CH—CH_2—$ mit Alk in der obigen Bedeutung, bevorzugt Methyl, gebräuchlich.

In Dialkylzinnverbindungen und Monoalkylzinnverbindungen sind als Alkylreste Butyl- und Octylreste bevorzugt, ferner Methylreste und der genannte substituierte Alkylrest gebräuchlich.

In allen genannten Organozinnverbindungen können als einwertige Reste X Halogengruppen, besonders Chlor oder Fluor, Carbonsäurereste und Carbonsäureesterreste der Struktur $—(H_2C)_x—CO—O—Alk$, $—(CH_2)_x—O—CO—Alk$ oder $—O—CO—Alk$ mit $X = 1$ oder 2 und Alk in der vorigen Bedeutung, als Rest $—O—CO—Alk$, besonders der Acetylrest und weiterhin langkettige Fettsäurereste mit 10 bis 20 Kohlenstoffatomen, besonders der Lauroylrest, Alkoxirest mit 1 bis 10 Kohlenstoffatomen und insbesondere Mercaptid- und Sulfidreste der Struktur $—S—(CH_2)_x—CO—O—Alk$, $—S—(CH_2)_x—O—CO—Alk$ und $—S—Alk$ mit X und Alk in der vorigen Bedeutung ein- bis dreimal vorhanden sein.

Bevorzugte Mercaptidreste sind der Butylthioglycolrest und Isooctylthioglykolrest. Möglich sind weiter Halbester gesättigter oder ungesättigter Dicarbonsäure wie Maleinsäurehalbester, besonders der Methylester.

Zweiwertige Reste X sind Oxid-, Sulfat- und Sulfidreste, Reste gesättigter und ungesättigter Dicarbonsäuren, von denen Fumar- und Maleinsäurereste bevorzugt sind, sowie insbesondere Thiocarbonsäurereste mit 2 bis 10 Kohlenstoffatomen, von denen der Mercaptoacetylrest und der 3-Mercaptopropionsäurerest bevorzugt sind.

Im einzelnen sind zu nennen bis-(Tripropyl-, Tributyl-, Trioctyl-, Triisooctyl- und Trisphenyl-)zinnoxide und -zinnsulfide, die entsprechenden Triorganozinnchloride und -fluoride sowie die als Tributyl-, Trioctyl- und Triphenyl-zinncarboxylate bezeichneten Ester von Monocarbonsäuren oder Halbester von Dicarbonsäuren, wie Azetate, Benzoate, Pivalate, Linolate oder Malenate; Dialkylzinndihalogenide wie Dibutylzinndichlorid, Di-n-octylzinndichlorid sowie Diphenylzinndichlorid, Dibutyl- und Dioctylzinnoxid, Dimethyl-, Dibutyl- und Diphenylzinnsulfid, sowie die Dialkylzinndialkoxide in denen die genannten Alkylreste und Alkoxygruppen mit 1 bis besonders 3 Kohlenstoffatomen enthalten sind, weiterhin Dibutyl- bzw. Dioctylzinn-dilaurate und -diacetate, Dibutyl- und.Dioctylzinndicarbonsäurehalbester bzw. -zinnthiocarbonsäurehalbester wie -dimaleinsäure-methyl bzw. -butyl bzw. -octylester bzw. Diorgano-zinn-methoxy-maleinsäureester -di(methoxymaleinsäuremethylester), -di(isooctyl-thioglykolate) oder -maleinate, Dimethylzinn-diisooctylthioglykolat, Dibutylzinn-Diisooctylthioglykolat sowie Dioctylzinn- und Dibutylzinn-thioglykolester und Di-n-octylzinn-S,S'-bis(isoctylmercaptoacetat) und Monoorganozinnverbindungen wie n-Butyltrichlorid, Monomethyl- bzw. Monobutylzinnoxide und Zinnsulfide des Adamantantypus sowie Monomethyl-, Monobutyl- und Monooctylzinnalkoxide, in denen ein, zwei oder drei Alkoxygruppen, besonders die Äthoxygruppe durch Dicarbonsäurehalbester, Thiocarbonsäurehalbester und/oder Carbonsäuren substituiert sind wie n-Octylzinn-tris-(isooctylthioglykolate) oder -laureat.

Als Zinn-(II)-Salze werden besonders Zinn-II-chlorid und Zinn-(II)-sulfat, gegebenenfalls in kristallwasserhaltiger Form, verwendet.

Das bevorzugte Anwendungsgebiet der Erfindung sind witterungsbeständige Formkörper, hergestellt aus Kunststoff-Formmassen, insbesondere auf Basis Weich-PVC und/oder Ethylen/Vinylacetatcopolymeren bzw. Ethylen/Vinylacetat-pfropfpolymeren mit aufgepfropftem Polyvinylchlorid und ggf. Polyethylen, enthaltend Stabilisatoren für die Licht-, Wetter- und Wärmebeständigkeit und ggf. übliche Zusätze wie beispielsweise Farbmittel, Füllstoffe und Gleitmittel o. dgl. sowie der biociden Wirkstoffkombination. Weiterer Gegenstand der Erfindung ist die Verwendung einer biociden Wirkstoffkombination aus 10,10'-Oxybisphenoxyarsin und einer dessen Eluierung verhindernden Zinnverbindung in Formmassen aus Kunststoff, insbesondere auf Basis Weich-Polyvinylchlorid, sowie in daraus hergestellten Formkörpern, gekennzeichnet durch den Zusatz einer Organo-Zinnverbindung oder eines Zinn-II-Salzes als die Eluierung der Arsenverbindung aus Kunststoff verhinderndes Mittel in Mengen von 0,1 bis 5,0 Gew.-Teilen berechnetes Zinn einer Zinnverbindung je Gew.-Teil der Phenoxyarsin-Verbindung.

Hierbei sind Gehalte von 0,005 bis 0,08, vorzugsweise 0,01 bis 0,05 Gew.-Teile einer Arsenverbindung, berechnet auf 100 Gew.-Teile Formmasse für die gewünschte Wirkung in der Regel ausreichend, können ggf. aber auch unterschritten werden.

Zinnverbindungen, die die Eluierung der Arsenverbindung verhindern, sollen in Mengen von 0,1 bis 5,0 Gew.-Teilen berechnetes Zinn einer Zinnverbindung je Gewichtsteil der Arsenverbindung enthalten sein.

Die erfindungsgemäßen witterungsbeständigen Produkte auf Basis Weich-PVC weisen die Vorteile einer guten Licht-, Wetter- und Wärmebeständigkeit durch geeignete Stabilisatoren, vorzugsweise auf Basis von Barium-Cadmium-Verbindungen und/oder Calcium-Zink-Verbindungen und/oder Bleiverbindungen bzw. in Kombination mit weiteren Stabilisatoren auf und verhindern zugleich das Ansiedeln von Bewuchs, wie Algen, Mikroorganismen usw.

Soweit die erfindungsgemäß eingesetzten Zinnverbindungen auch Stabilisatoren gegen Lichteinflüsse, Witterungseinflüsse oder Zersetzung durch Wärmeeinflüsse bei der Verarbeitung oder dem Gebrauch sind, können die Organozinnverbindungen als Nebeneffekt die Ba—Cd-, Ca—Zn- bzw. Blei-Grundstabilisierung ergänzen oder ggf. ersetzen. Hinzu kommt, daß von den gewählten Zinn-Verbindungen solche vorzugsweise eingesetzt werden, die weitgehendst toxikologisch unbedenklich sind und sogar von den Gesundheitsbehörden für den Einsatz in Kontakt mit Lebensmitteln freigegeben sind.

Das bevorzugte Anwendungsgebiet der Erfindung sind Produkte auf Basis von Weich-PVC, die gerade im Hinblick auf die Weichmacher bzw. die Ethylen/Vinylacetat-co bzw. -pfropfpolymerisate einer besonderen Stabilisierung gegen biologischen Angriff benötigen.

Anwendungen von Produkten auf Basis Weich-PVC sind beispielsweise Folien, Platten und Dichtungsbahnen zum Auskleiden bzw. Abdecken von Schwimmbecken, Feuchträumen, Kühlwasserbehältern, Dächern, Brücken, Tunnel usw. PVC-Formkörper mit Gehalten der biociden Wirkstoffkombination können weiter als dem Wasser oder der Außenbewitterung ausgesetzte Konstruktionsteile oder Profile wie Teile von Behältern, Wäschern, Kläranlagen, Stegen, Rohren, Schwimmkörpern etc. Verwendung finden. Weiter kann die Wirkstoffkombination Anstrichmitteln zugesetzt werden. Für Formmassen auf Basis Weich-PVC kommen als Weichmacher insbesondere die Ester mehrbasischer Säuren mit einwertigen Alkoholen, wie Phthalate, Ester der Adipinsäure und Sebazinsäure, Trimellitsäureester, Paraffin-Sulfonsäure-Phenyl/Kresyl-Ester in Frage, wobei bevorzugt 15—50 Gew.-Teile Weichmacher bezogen auf 100 Gew.-Teile PVC-Formmasse vorgesehen sind.

PVC kann nicht nur durch Zusatz von niedermolekularen Weichmachern weichgemacht werden, sondern kann auch hochpolymere weichmachende Additive, wie Ethylenvinylacetat oder Ethylenvinylacetat-copolymere bzw. -pfropfpolymere, chloriertes Polyäthylen o. dgl. enthalten oder ganz oder teilweise aus den Co- bzw. Pfropfpolymerisaten bestehen. Die erfindungsgemäßen Formmassen können 20—80 Gew.-Teile hochpolymere weichmachende Additive bezogen auf 100 Gew.-Teile Formmasse enthalten, wobei jedoch Weichmacher und hochpolymere Additive zusammen nicht mehr als 80 Gew.-% der Formmasse ausmachen sollten.

Im Falle der EVA-Pfropfpolymerisate können diese wegen des Gehalts von aufgepfropftem PVC den gesamten Kunststoffanteil der Formmasse bilden.

Es hat sich gezeigt, daß durch den Einsatz der erfindungsgemäßen Wirkstoffkombination sehr gute Ergebnisse erzielt werden, die durch die Verwendung von 10,10'-Oxy-bis-phenoxyarsin allein oder der Zinnverbindungen allein nicht erzielt werden können.

10,10'-Oxy-bis-phenoxyarsin ist hochwirksam gegen biologischen Angriff, insbesondere besitzt 10,10'-Oxy-bis-phenoxyarsin nicht die für andere Arsenverbindungen typische Warmblütertoxizität. Der bestehende Nachteil der Eluierbarkeit gerade von 10,10'-Oxy-bis-phenoxyarsin aus Kunststoffen wird nunmehr durch den Zinn-Bestandteil der Wirkstoffkombination beseitigt bzw. in dem für die Anwendung wünschenswerten Maße vermindert.

Die Wirksamkeit biocider Mittel wird allgemein auf eine aus der Bakteriologie abgeleitete Weise geprüft, indem die Oberfläche mit aufgeschwemmten Mikroorganismen infiziert und anschließend »bebrütet« wird. Die sich bei Proben ohne Wirksubstanz zeigenden Kolonien von Mikroorganismen um infizierte Stellen sind im Falle der Gehalte wirksamer biocider Mittel in der Oberfläche nach Zahl und Größe vermindert oder nicht mehr vorhanden.

Häufig verwendet man für die Beurteilung der Wirksamkeit einer biociden Substanz den sich um die Probe bildenden Hemmhof. Je größer dieser ausfällt, um so größere biologische Wirksamkeit wird der Wirksubstanz zugeschrieben.

Für kurzlebige Produkte ist diese Betrachtungsweise durchaus geeignet, während für langlebige Produkte die hohe Eluierung nach dem Stand der Technik bzw. die erfindungsgemäß verminderte Eluierbarkeit zu berücksichtigen ist.

Aus den Beispielen ist insbesondere die Wirkung der Zinnverbindungen der Beispiele 2 bis 13 gegenüber Beispiel 1 zu erkennen. In den ersten 6 bis 8 Wochen der Eluierung mit fließendem Wasser ist in den erfindungsgemäßen Beispielen 2 ff. der Arsengehalt der Folie nicht oder wenig vermindert, wobei insbesondere auch bei 30°C gegenüber 20°C praktisch keine höhere Eluierung auftritt. Demgegenüber wird ohne Zusatz der Zinnverbindungen (Beispiel 1) schon nach 6 bis 8 Wochen der Arsengehalt der Folie bei 20°C auf etwa die Hälfte, bei 30°C auf etwa ein Drittel gesenkt.

Im Dauertest der Tabelle 2 zeigt sich, daß in der langen Testzeit von 10 bis 52 Wochen der Arsengehalt zwar sinkt, aber praktisch konstante Werte in einer Größenordnung erhalten bleiben, die die gewünschte biocide Wirksamkeit auf Dauer möglich machen.

## Beispiele

Die in den Beispielen 1 bis 8 zugrundeliegende Grundrezeptur besteht aus 60 Gew.-Teilen S-PVC, 40 Gew.-Teilen eines $C_8$—$C_{10}$ Alkylphthalat-Weichmachers, 3,8 Gew.-Teile eines PVC-Stabilisators auf überwiegend Bleibasis, sowie aus gebräuchlichen Farbpigmenten in einer Menge von 1,5 Gew.-Teilen.

Die für die Prüfung und Wertung verwendeten Materialproben wurden in 1,2 mm Dicke durch Kalandrieren hergestellt.

## Beispiel 1 (Vergleich)

Einer Grundrezeptur gemäß vorbeschriebener Zusammensetzung werden zusätzlich 0,05 Gew.-Teile 10,10'-Oxy-bis-phenoxyarsin beigegeben und hieraus eine Folie von 1,2 mm Dicke durch Kalandrieren hergestellt. Eine Folienprobe von 35 cm² wurde in einem Gefäß mit Wasser der Temperatur 20°C bzw. 30°C eingehängt (Wasseraustausch in ca. 1,5 Stunden einmal durch kontinuierlichen Zu- und Ablauf) und nach unterschiedlichen Eluierungszeiten der As-Gehalt bestimmt. Die Versuchsergebnisse sind in Tabelle 1 dargestellt.

Tabelle 1

| | Beispiel 1 | 2 | 3 | 4 | 5 | 6 | 7 | 8 |
|---|---|---|---|---|---|---|---|---|

Gehalt an 10,10'-Oxy-bis-phenoxyarsin im Frischmaterial in Gew.-Teilen

| | 0,050 | 0,050 | 0,050 | 0,050 | 0,050 | 0,050 | 0,050 | 0,050 |
|---|---|---|---|---|---|---|---|---|

Gehalt an 10,10'-Oxy-bis-phenoxyarsin im Probenmaterial nach Lagerung im fließenden Wasser bei 20° C in Gew.-Teilen

Lagerzeit

| | | | | | | | | |
|---|---|---|---|---|---|---|---|---|
| 1 Woche | 0,0486 | 0,048 | 0,048 | 0,045 | 0,048 | 0,0486 | 0,0486 | 0,0486 |
| 2 Wochen | 0,0417 | 0,048 | 0,048 | 0,045 | 0,041 | 0,0486 | 0,0486 | 0,0417 |
| 4 Wochen | 0,0347 | 0,048 | 0,048 | 0,045 | 0,041 | 0,0486 | 0,0486 | 0,0382 |
| 8 Wochen | 0,0243 | 0,045 | 0,048 | 0,041 | 0,038 | 0,0486 | 0,0486 | 0,0347 |

Gehalt an 10,10'-Oxy-bis-phenoxyarsin im Probenmaterial nach Lagerung im fließenden Wasser bei 30° C in Gew.-Teilen

Lagerzeit

| | | | | | | | | |
|---|---|---|---|---|---|---|---|---|
| 1 Woche | 0,0417 | 0,0486 | 0,0486 | 0,0452 | 0,0452 | 0,0452 | 0,0452 | 0,0452 |
| 2 Wochen | 0,0313 | 0,0452 | 0,0417 | 0,0452 | 0,0382 | 0,0452 | 0,0452 | 0,0382 |
| 4 Wochen | 0,0313 | 0,0452 | 0,0382 | 0,0382 | 0,0382 | 0,0417 | 0,0417 | 0,0347 |
| 8 Wochen | 0,0173 | 0,0417 | 0,0382 | 0,0347 | 0,0382 | 0,0417 | 0,0417 | 0,0313 |

## Beispiele 2 bis 8

Beispiel 1 wird wiederholt, jedoch werden der Rezeptur zusätzlich folgende Mengen von Zinnverbindungen zugegeben, und zwar:

| Beispiel | | |
|---|---|---|
| 2 | 0,6 Gew.-Teile | Trialkylzinn-Verbindung* ≙ 0,158 Gew.-Teilen Sn |
| 3 | 1,0 Gew.-Teile | Dibutylzinnmercaptid-Verb.** ≙ 0,159 Gew.-Teile Sn |
| 4 | 1,1 Gew.-Teile | Dibutylzinncarboxylat-Verb.*** ≙ 0,153 Gew.-Teile Sn |
| 5 | 0,85 Gew.-Teile | Dibutylzinnmaleinsäureester**** ≙ 0,162 Gew.-Teile Sn |
| 6 | 0,95 Gew.-Teile | Esterzinn-Verbindung***** ≙ 0,157 Gew.-Teile Sn |
| 7 | 0,85 Gew.-Teile | Dimethylzinn-Verbindung****** ≙ 0,157 Gew.-Teile Sn |
| 8 | 0,25 Gew.-Teile | Zinn-(II)chlorid ≙ 0,157 Gew.-Teile Sn |

| | |
|---|---|
| * | Irgarol 541 L der Ciba Geigy |
| ** | Irgastab 17 M der Ciba Geigy |
| *** | Irgastab T 150 der Ciba Geigy |
| **** | Irgastab T 4 der Ciba Geigy |
| ***** | Irgastab T 649 der Ciba Geigy |
| ****** | Irgastab T 31 P der Ciba Geigy |

# 0 049 367

Die nach Eluieren mit fließendem Wasser gemäß Beispiel 1 in der Folie enthaltenen Arsenwerte sind in Tabelle 1 genannt.

Während die Vergleichsprobe ohne Zinngehalt aus Beispiel 1 einen deutlichen Arsen-Verlust durch die Eluierung mit Wasser aufweist, zeigen alle zinnhaltigen Folien (Beispiele 2 bis 8) einen wesentlich geringeren Arsenverlust. Dies gilt auch für das sehr gut in Wasser lösliche Zinn-(II)chlorid.

## Beispiel 9

Entsprechend der Grundrezeptur wurde eine Folie mit 0,025 Gew.-Teilen 10,10'-Oxy-bis-phenoxyarsin und 0,3 Gew.-Teilen einer Trialkylzinn-Verbindung (Irgarol Bl 541 L der Ciba Geigy; Sn-Gehalt 0,079 Gew.-Teile) hergestellt und wie unter Beispiel 1 beschrieben mit Wasser eluiert.

Die nach Eluieren mit fließendem Wasser in der Folie enthaltenen Arsenwerte sind im Vergleich mit den Werten der Beispiele 1 und 2 in Tabelle 2 genannt.

## Beispiel 10 bis 13

In den Beispielen 10 bis 13 sind der Grundrezeptur 0,050 Gew.-Teile 10,10'-Oxy-bis-phenoxyarsin zugegeben und eine jeweils unterschiedliche Menge der Trialkylzinnverbindung nach Beispiel 9, um den Einfluß des Zinngehaltes auf die Eluierbarkeit des Arsens darzustellen. Im einzelnen sind der Rezeptur gemäß Beispiel 1 folgende Mengen Trialkylzinn-Verbindung zugegeben:

| Beispiel | Gew.-Teile Sn | Gew.-Verhältnis As Verbindung/Sn |
|----------|---------------|----------------------------------|
| 1 | 0,000 | — |
| 2 | 0,158 | 1 : 3,16 |
| 10 | 0,118 | 1 : 2,36 |
| 11 | 0,079 | 1 : 1,58 |
| 12 | 0,026 | 1 : 0,52 |
| 13 | 0,016 | 1 : 0,32 |

Die nach Eluieren mit fließendem Wasser in der Folie enthaltenen Arsengehalte sind im Vergleich zueinander in der Tabelle 3 zusammengestellt.

7

Tabelle 2

| | Beispiel 1 | | 2 | | 9 | |
|---|---|---|---|---|---|---|
| **Im Frischmaterial** | | | | | | |
| Gew.-Teile 10,10'-Oxy-bis-phenoxyarsin | 0,050 ( = 100%) | | 0,050 ( = 100%) | | 0,025 ( = 100%) | |
| Gew.-Teile Sn | — | | 0,158 | | 0,079 | |

Gehalt an 10,10'-Oxy-bis-phenoxyarsin im Probenmaterial nach Lagerung in fließendem Wasser bei 20° C in Gew.-Teilen

| Lagerung | | | | | | |
|---|---|---|---|---|---|---|
| 1 Woche | 0,0486 | 97,2% | 0,0486 | 97,2% | 0,0243 | 97,2% |
| 4 Wochen | 0,0347 | 69,4% | 0,0486 | 97% | 0,0243 | 97,2% |
| 8 Wochen | 0,0243 | 48,6% | 0,0452 | 90,4% | 0,0208 | 83,2% |
| 20 Wochen | 0,0173 | 34,6% | 0,0382 | 76,4% | 0,0208 | 83,2% |
| 36 Wochen | 0,0140 | 28,0% | 0,0382 | 76,4% | 0,0173 | 69,2% |
| 52 Wochen | 0,0140 | 28,0% | 0,0382 | 76,4% | 0,0173 | 69,2% |

Gehalt an 10,10'-Oxy-bis-phenoxyarsin im Probenmaterial nach Lagerung in fließendem Wasser bei 30° C in Gew.-Teilen

| Lagerung | | | | | | |
|---|---|---|---|---|---|---|
| 1 Woche | 0,0417 | 83,4% | 0,0486 | 97,2% | 0,0243 | 97,2% |
| 4 Wochen | 0,0313 | 62,6% | 0,0452 | 90,4% | 0,0243 | 97,2% |
| 8 Wochen | 0,0173 | 34,6% | 0,0417 | 83,4% | 0,0208 | 83,2% |
| 20 Wochen | 0,0140 | 28,0% | 0,0347 | 69,4% | 0,0173 | 69,2% |
| 36 Wochen | 0,0104 | 20,8% | 0,0347 | 69,4% | 0,0173 | 69,2% |
| 52 Wochen | 0,0104 | 20,8% | 0,0347 | 69,4% | 0,0140 | 56,0% |

Tabelle 3

|  | Beispiel 1 | 2 | 10 | 11 | 12 | 13 |
|---|---|---|---|---|---|---|
| **Frischmaterial** | | | | | | |
| Gew.-Teile 10,10'-Oxy-bis-phenoxyarsin | 0,050 | 0,050 | 0,050 | 0,050 | 0,050 | 0,050 |
| Gew.-Teile Sn | 0,0 | 0,158 | 0,118 | 0,079 | 0,026 | 0,016 |

Gehalt an 10,10'-Oxy-bis-phenoxyarsin im Probenmaterial nach Lagerung in fließendem Wasser bei 20° C in Gew.-Teilen

| Lagerzeit | | | | | | |
|---|---|---|---|---|---|---|
| 1 Woche | 0,0486 | 0,0486 | 0,0486 | 0,0486 | 0,0486 | 0,0486 |
| 2 Wochen | 0,0417 | 0,0486 | 0,0486 | 0,0486 | 0,0486 | 0,0486 |
| 4 Wochen | 0,0347 | 0,0486 | 0,0486 | 0,0486 | 0,0452 | 0,0452 |
| 8 Wochen | 0,0243 | 0,0452 | 0,0486 | 0,0486 | 0,0452 | 0,0452 |

Gehalt an 10,10'-Oxy-bis-phenoxyarsin im Probenmaterial nach Lagerung in fließendem Wasser bei 30° C in Gew.-Teilen

| Lagerzeit | | | | | | |
|---|---|---|---|---|---|---|
| 1 Woche | 0,0417 | 0,0486 | 0,0486 | 0,0486 | 0,0452 | 0,0452 |
| 2 Wochen | 0,0313 | 0,0452 | 0,0452 | 0,0452 | 0,0452 | 0,0417 |
| 4 Wochen | 0,0313 | 0,0452 | 0,0452 | 0,0417 | 0,0382 | 0,0382 |
| 8 Wochen | 0,0173 | 0,0417 | 0,0417 | 0,0417 | 0,0382 | 0,0382 |

Aus Tabelle 3 ist erkennbar, daß Zinnverbindungen in ihrer eluierungsverhindernden Wirkung über einen weiten Konzentrationsbereich bezogen auf die Arsenkonzentration wirksam sind.

## Beispiel 14

Beispiel 3 wurde mit den dort angegebenen Gehalten der Arsenverbindung und der Zinnverbindung wiederholt, wobei jedoch folgende Grundrezepturen verwendet wurden.

58 Gew.-Teile   Suspensions PVC (K-Wert 70)
40 Gew.-Teile   EVA (45 Gew.-% VA-Anteil)
2 Gew.-Teile   Epoxidiertes Sojabohnenöl
2 Gew.-Teile   Ba/Cd. Stabilisator
0,7 Gew.-Teile Gleitmittel

Die Ergebnisse von Eluierungsversuchen entsprachen Beispiel 3.

9

Beispiel 15

Beispiel 3 wurde mit den dort angegebenen Gehalten der Arsenverbindung und der Zinnverbindung wiederholt wobei jedoch folgende Grundrezepturen verwendet wurden.

92 Gew.-Teile Pfropfpolymerisat PVC auf EVA (31,5 Gew.-% VA im Pfropfpolymerisat; Basis EVA mit 63 Gew.-% VA)
8 Gew.-Teile Weichmacher Dioctylphthalat
2 Gew.-Teile Ba/Cd Stabilisator
0,8 Gew.-Teile Gleitmittel

Die Ergebnisse von Eluierungsversuchen entsprachen Beispiel 3.

Die nach den Beispielen zugesetzten handelsüblichen Zinnverbindungen enthalten folgende Zinnverbindungen:

Irgarol 541 L: 50% Tributylzinn-tetrachlorophthalat
50% Tributylzinn-oleat
Irgastab 17 M: Dibutylzinn-bis-thioglykolsäureester
Irgastab T 150: Dibutylzinn-bis-maleinsäure-iso-butylhalbester
Irgastab T 4: Dibutylzinn-bis-maleinsäure-iso-butylhalbester
Irgastab T 649: Di-2-Carbo-butoxi-äthylzinn-bis-thioglykol-isooctylester
Irgastab T 31 M: Dimethylzinn-bis-thioglykolsäureester

**Patentansprüche für die Vertragsstaaten: BE, CH, DE, FR, GB, IT, LI, LU, NL, SE**

1. Formmassen zur Herstellung von Formkörpern aus Kunststoff, insbesondere auf Basis Weich-PVC und/oder Ethylen/Vinylacetat-Co- bzw. Pfropfpolymerisaten oder gegebenenfalls Polyethylen, enthaltend Stabilisatoren für die Licht-, Wetter- und Wärmebeständigkeit und ggf. übliche Zusätze wie beispielsweise Farbmittel, Füllstoffe, Gleitmittel sowie 10,10'-Oxy-bis-phenoxyarsin als biociden Wirkstoff, gekennzeichnet durch den Zusatz einer Organo-Zinnverbindung oder eines Zinn-II-Salzes als die Eluierung der Arsenverbindung aus Kunststoff verhindernden Mittel in Mengen von 0,1 bis 5,0 Gew.-Teile berechnetes Zinn einer Zinnverbindung je Gew.-Teil der Phenoxyarsin-Verbindung.

2. Formmasse nach Anspruch 1, dadurch gekennzeichnet, daß je 100 Gew.-Teile Formmasse 0,005—0,08 Gew.-Teile der Arsenverbindung sowie 0,1 bis 5,0 Gew.-Teile berechnetes Zinn einer Zinnverbindung je Gew.-Teil der Arsenverbindung enthalten sind.

3. Formmasse nach einem der Ansprüche 1 oder 2, gekennzeichnet durch einen Gehalt von 15 bis 50 Gew.-Teile Weichmacher, bezogen auf 100 Gew.-Teile Formmasse.

4. Formmasse nach mindestens einem der Ansprüche 1 bis 3, dadurch gekennzeichnet, daß gegebenenfalls 20 bis 80 Gew.-Teile polymerer weichmachender Additive wie Ethylenvinylacetat-copolymer oder -pfropfpolymere, chlorierte Polyäthylene o. dgl. bezogen auf 100 Gew.-Teile Formmasse enthalten sind.

5. Formmasse nach den Ansprüchen 3 oder 4, dadurch gekennzeichnet, daß Weichmacher und hochpolymere Additive zusammen nicht mehr als 80 Gew.-Teile der Formmasse ausmachen.

6. Verwendung einer biociden Wirkstoffkombination aus 10,10'-Oxy-bis-phenoxyarsin und einer dessen Eluierung verhindernden Zinnverbindung in Formmassen aus Kunststoff, insbesondere auf Basis Weich-Polyvinylchlorid, sowie in daraus hergestellten Formkörpern, gekennzeichnet durch den Zusatz einer Organo-Zinnverbindung oder eines Zinn-II-Salzes als die Eluierung der Arsenverbindung aus Kunststoff verhinderndes Mittel in Mengen von 0,1 bis 5,0 Gew.-Teilen berechnetes Zinn einer Zinnverbindung je Gew.-Teil der Phenoxyarsin-Verbindung.

**Patentansprüche für den Vertragsstaat: AT**

1. Verfahren zur Herstellung einer Kunststoff-Formmasse, insbesondere auf Basis Weich-PVC und/oder Ethylen/Vinylacetat-Co- bzw. Pfropfpolymerisaten oder gegebenenfalls Polyethylen, dadurch gekennzeichnet, daß der Kunststoff und gegebenenfalls Stabilisatoren für die Licht-, Wetter- und Wärmebeständigkeit und gegebenenfalls übliche Zusätze wie beispielsweise Farbmittel, Füllstoffe, Gleitmittel sowie 10,10'-Oxy-bis-phenoxyarsin als biocider Wirkstoff und als die Eluierung der Arsenverbindung aus Kunststoff verhinderndes Mittel eine Organo-Zinnverbindung oder ein Zinn-II-Salz, in Mengen von 0,1 bis 5,0 Gew.-Teilen berechnetes Zinn einer Zinnverbindung je Gew.-Teil der Phenoxyarsin-Verbindung vermischt und formgebend verarbeitet werden.

2. Verfahren nach Anspruch 1, dadurch gekennzeichnet, daß je 100 Gew.-Teile Formmasse 0,005—0,08 Gew.-Teile der Arsenverbindung sowie 0,1 bis 5,0 Gew.-Teile berechnetes Zinn einer Zinnverbindung je Gew.-Teil der Arsenverbindung enthalten sind.

3. Verfahren nach einem der Ansprüche 1 oder 2, gekennzeichnet durch einen Gehalt von 15 bis 50 Gew.-Teile Weichmacher, bezogen auf 100 Gew.-Teile Formmasse.

4. Verfahren nach mindestens einem der Ansprüche 1 bis 3, dadurch gekennzeichnet, daß gegebenenfalls 20 bis 80 Gew.-Teile polymerer weichmachender Additive wie Ethylenvinylacetat-copolymer oder -pfropfpolymere, chlorierte Polyäthylene o. dgl. bezogen auf 100 Gew.-Teile Formmasse enthalten sind.

5. Verfahren nach den Ansprüchen 3 oder 4, dadurch gekennzeichnet, daß Weichmacher und hochpolymere Additive zusammen nicht mehr als 80 Gew.-Teile der Formmasse ausmachen.

6. Verwendung einer biociden Wirkstoffkombination aus 10,10'-Oxy-bis-phenoxyarsin und einer dessen Eluierung verhindernden Zinnverbindung in Formmassen aus Kunststoff, insbesondere auf Basis Weich-Polyvinylchlorid, sowie in daraus hergestellten Formkörpern, gekennzeichnet durch den Zusatz einer Organo-Zinnverbindung oder eines Zinn-II-Salzes als die Eluierung der Arsenverbindung aus Kunststoff verhinderndes Mittel in Mengen von 0,1 bis 5,0 Gew.-Teilen berechnetes Zinn einer Zinnverbindung je Gew.-Teil der Phenoxyarsin-Verbindung.

## Claims for the contracting States: BE, CH, DE, FR, GB, IT, LI, LU, NL, SE

1. Moulding compositions for the production of shaped plastics bodies, in particular based on soft PVC and/or ethylene/vinylacetate co- or graft polymers or, optionally, polyethylene, containing stabilisers for the light-, weather- and heat-resistance thereof and optionally conventional additives such as for example colouring agents, fillers, lubricants as well as 10,10'-oxy-bis-phenoxyarsine as biocidal agent, characterised by the addition of an organotin compound or a tin-II-salt in amounts of 0.1 to 5.0 parts by weight of a tin compound, calculated as tin of per part by weight of the phenoxyarsine compound as agent preventing the elution of the arsenic compound from plastics.

2. Moulding compositions according to claim 1, characterised in that there are contained, per 100 parts by weight of moulding composition, 0.005—0.08 parts by weight of the arsenic compound as well as 0.1 to 5.0 parts by weight of a tin compound, calculated as tin, per part by weight of the arsenic compound.

3. Moulding compositions according to one of claims 1 or 2, characterised by a content of 15 to 50 parts by weight of plasticizer, related to 100 parts by weight of moulding composition.

4. Moulding compositions according to at least one of claims 1 to 3, characterised in that there are optionally contained 20 to 80 parts by weight of polymeric softening additives as well as ethylenevinylacetate co-polymer or graft-polymers, chlorinated polyethylene or the like, related to 100 parts by weight of moulding composition.

5. Moulding compositions according to claim 3 or 4, characterised in that plasticizer and high polymeric additives do not constitute together more than 80 parts by weight of the moulding compositions.

6. Use of a biocidal active combination of 10,10'-oxy-bis-phenoxyarsine and a tin compound preventing its elution, in plastics moulding compositions, especially based on soft polyvinyl chloride, as well as in moulded bodies produced therefrom, characterised by the addition of an organotin compound or a tin-II-salt as the agent preventing the elution of the arsenic compound from plastic, in amounts of 0.1 to 5.0 parts by weight of a tin compound, calculated as tin, per part by weight of the phenoxyarsine compound.

## Claims for the contracting State: AT

1. Process for the preparation of a plastics moulding composition, especially based on soft PVC and/or ethylene/vinylacetate co- or graft-polymers or optionally polyethylene, characterised in that the plastics and optionally stabilisers for the light-, weather- and heat-resistance and optionally usual additives such as for example colourants, fillers, lubricants, as well as 10,10'-oxy-bis-phenoxyarsine as biocidal agent and, as agent preventing the elution of the arsenic compound from the plastic, an organotin compound or a tin-II-salt in amounts of 0.1 to 5.0 parts by weight of a tin compound, calculated as tin, per part by weight of the phenoxyarsine compound, are mixed and are worked by moulding.

2. Process according to claim 1, characterised in that there are contained per 100 parts by weight of moulding composition, 0.005—0.08 parts by weight of the arsenic compound as well as 0.1 to 5.0 parts by weight of a tin compound, calculated as tin, per part by weight of the arsenic compound.

3. Process according to one of claims 1 or 2, characterised by a content of 15 to 50 parts by weight of plasticizer, related to 100 parts by weight of moulding composition.

4. Process according to at least one of claims 1 to 3, characterised in that there are optionally contained 20 to 80 parts by weight of polymeric softening additives as well as ethylenevinyl-acetate co-polymer or graft-polymers, chlorinated polyethylene of the like, related to 100 parts by weight of moulding composition.

5. Process according to claims 3 or 4, characterised in that plasticizer and high polymeric additives do not constitute together more than 80 parts by weight of the moulding compositions.

6. Use of a biocidal active combination of 10,10'-oxy-bis-phenoxyarsine and a tin compound preventing its elution, in plastics moulding compositions, especially based on soft polyvinyl chloride, as well as in moulded bodies produced therefrom, characterised by the addition of an organotin compound or a tin-II-salt as the agent preventing the elution of the arsenic compound from plastic, in amounts of 0.1 to 5.0 parts by weight of a tin compound, calculated as tin, per part by weight of the phenoxyarsine compound.

**Revendications pour les Etats contractants: BE, CH, DE, FR, GB, IT, LI, LU, NL, SE**

1. Matière à mouler de matière synthétique, en particulier, à base de chlorure de polyvinyle mou et/ou de copolymères ou de polymères greffés d'éthylène/acétate de vinyle ou éventuellement de polyéthylène, caractérisé en ce qu'on mélange la matière synthétique et éventuellement des stabilisants pour assurer la stabilité à la lumière, aux agents atmosphériques et à la chaleur, ainsi qu'éventuellement des additifs habituels tels que, par exemple, des colorants, des charges, des lubrifiants, ainsi que la 10,10'-oxy-bis-phénoxyarsine comme substance active biocide et, comme agent empêchant l'élution du composé d'arsenic hors de la matière synthétique, un composé d'organo-étain ou un sel d'étain (II) en quantités de 0,1 à 5 parties en poids, calculé en étain, d'un composé d'étain par partie en poids du composé de phénoxy-arsine.

2. Matière à mouler suivant la revendication 1, caractérisé en ce que, pour 100 parties en poids de la matière à mouler, on a 0,005—0,08 partie en poids du composé d'arsenic, ainsi que 0,1 à 5 parties en poids (calculé en étain) d'un composé d'étain par partie en poids du composé d'arsenic.

3. Matière à mouler suivant une des revendications 1 et 2, caractérisé en ce qu'on a une teneur de 15 à 50 parties en poids de plastifiant, calculé sur 100 parties en poids de la matière à mouler.

4. Matière à mouler suivant au moins une des revendications 1 à 3, caractérisé en ce qu'on a éventuellement une teneur de 20 à 80 parties en poids d'additifs plastifiants polymères tels que le copolymère ou les polymères greffés d'éthylène/acétate de vinyle, les polyéthylènes chlorés ou analogues, calculé sur 100 parties en poids de la matière à mouler.

5. Matière à mouler suivant la revendication 3 ou 4, caractérisé en ce que les plastifiants et les additifs constitués de hauts polymères ensemble ne représentent pas plus de 80 parties en poids de la matière à mouler.

6. Utilisation d'une combinaison biocide de substances actives comprenant la 10,10'-oxy-bis-phénoxy-arsine et un composé d'étain empêchant l'élution de cette dernière dans des matières à mouler de matières synthétiques, en particulier, à base de chlorure de polyvinyle mou, ainsi que dans des corps moulés réalisés à partir de ces matières, caractérisée en ce qu'on ajoute un composé d'organo-étain ou un sel d'étain(II) comme agent empêchant l'élution du composé d'arsenic hors de la matière synthétique en quantités de 0,1 à 5 parties en poids, calculé en étain, d'un composé d'étain par partie en poids du composé de phénoxy-arsine.

**Revendications pour l'Etat contractant: AT**

1. Procédé de préparation d'une matière à mouler de matière synthétique, en particulier, à base de chlorure de polyvinyle mou et/ou de copolymères ou de polymères greffés d'éthylène/acétate de vinyle ou éventuellement de polyéthylène, caractérisé en ce qu'on mélange la matière synthétique et éventuellement des stabilisants pour assurer la stabilité à la lumière, aux agents atmosphériques et à la chaleur, ainsi qu'éventuellement des additifs habituels tels que, par exemple, des colorants, des charges, des lubrifiants, ainsi que la 10,10'-oxy-bis-phénoxy-arsine comme substance active biocide et, comme agent empêchant l'élution du composé d'arsenic hors de la matière synthétique, un composé d'organo-étain ou un sel d'étain(II) en quantités de 0,1 à 5 parties en poids (calculé en étain) d'un composé d'étain par partie en poids du composé de phénoxy-arsine, puis on procède à un traitement de façonnage.

2. Procédé suivant la revendication 1, caractérisé en ce que, pour 100 parties en poids de la matière à mouler, on a 0,005—0,08 partie en poids du composé d'arsenic, ainsi que 0,1 à 5 parties en poids (calculé en étain) d'un composé d'étain par partie en poids du composé d'arsenic.

3. Procédé suivant une des revendications 1 et 2, caractérisé en ce qu'on a une teneur de 15 à 50 parties en poids de plastifiant, calculé sur 100 parties en poids de la matière à mouler.

4. Procédé suivant au moins une des revendications 1 à 3, caractérisé en ce qu'on a éventuellement une teneur de 20 à 80 parties en poids d'additifs plastifiants polymères tels que le copolymère ou les polymères greffés d'éthylène/acétate de vinyle, les polyéthylènes chlorés ou analogues, calculé sur 100 parties en poids de la matière à mouler.

5. Procédé suivant la revendication 3 ou 4, caractérisé en ce que les plastifiants et les additifs constitués de hauts polymères ensemble ne représentent pas plus de 80 parties en poids de la matière à mouler.

6. Utilisation d'une combinaison biocide de substances actives comprenant la 10,10'-oxy-bis-phénoxy-arsine et un composé d'étain empêchant l'élution de cette dernière dans des matières à mouler de matières synthétiques, en particulier, à base de chlorure de polyvinyle mou, ainsi que dans des corps moulés réalisés à partir de ces matières, caractérisée en ce qu'on ajoute un composé d'organo-étain ou un sel d'étain(II) comme agent empêchant l'élution du composé d'arsenic hors de la matière synthétique en quantités de 0,1 à 5 parties en poids (calculé en étain) d'un composé d'étain par partie en poids du composé de phénoxy-arsine.